# EUROPEAN PATENT SPECIFICATION

(11) **EP 3 017 070 B1**
(45) Date of publication and mention of the grant of the patent: **21.09.2016**
(21) Application number: 14734793.4
(22) Date of filing: 27.06.2014
(51) Int. Cl.: C21B 3/08, F27D 15/02

(54) **STEAM CONDENSATION SYSTEM FOR A GRANULATION INSTALLATION**
DAMPFKONDENSATIONSSYSTEM FÜR EINE GRANULIERUNGSANLAGE
SYSTÈME DE CONDENSATION DE VAPEUR POUR UNE INSTALLATION DE GRANULATION

(30) Priority: 01.07.2013 LU 92236
(43) Date of publication of application: 11.05.2016
(73) Proprietor: Paul Wurth S.A., 1122 Luxembourg (LU)
(72) Inventor: KAPPES, Horst, 54295 Trier (DE); SCHWEITZER, Marc, L-8224 Mamer (LU); MATHIEU, Tommy, L-4964 Clemency (LU)
(74) Representative: Office Freylinger
(86) International application number: PCT/EP2014/063713
(87) International publication number: WO 2015/000809

(56) References cited:
- EP-A1- 0 573 769
- WO-A1-2012/079797

## Description

### Technical field

The present invention generally relates to a granulation installation for molten material, especially for metallurgical melts such as blast furnace slag. It relates more particularly to an improved steam condensation system for use in such an installation.

### Background Art

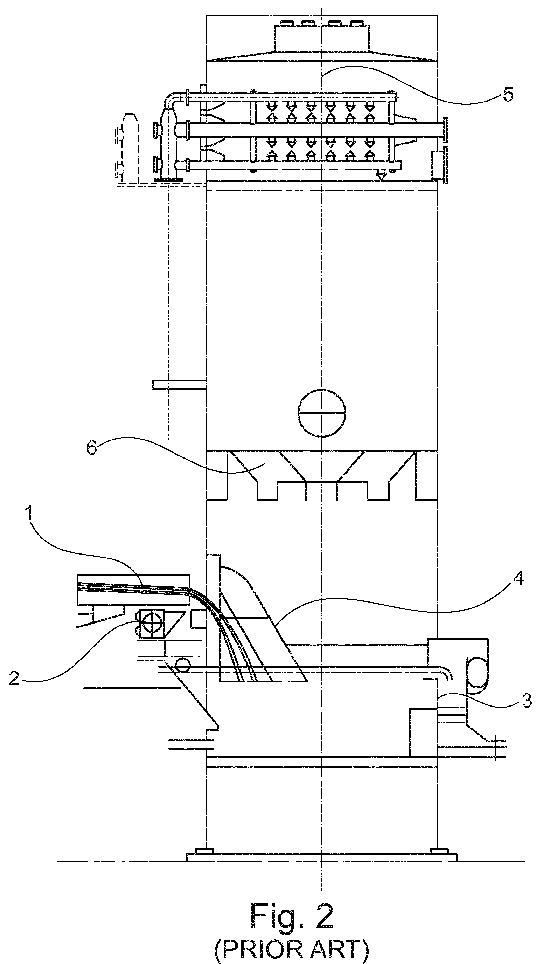

An example of a modern granulation installation of this type, especially for molten blast furnace slag, is illustrated in appended FIG.2 that is part of a paper entitled "INBA® Slag granulation system - Environmental process control" published in Iron&Steel Technology, issue April 2005. As seen in FIG.2, this kind of installation typically comprises: a water injection device [2] (also called blowing box), for injecting granulation water into a flow of molten material, e.g. slag that is received via a runner tip [1]. Thereby, granulation of the molten material is achieved. The installation further has a granulation tank [3] for collecting the granulation water and the granulated material and for cooling down the granules in a large water volume beneath the water injection device [2]. A steam condensation tower, typically having a cylindrical shell closed by a top cover, is located above the granulation tank for collecting and condensing steam generated in the granulation tank. In fact, due to the high temperatures of the molten material and the huge amount of quenching water required, a considerable amount of steam is typically produced by installations according to FIG.2 . To avoid pollution by simple emission of steam into the atmosphere, the steam condensation tower includes a steam condensing system, typically of the counter-current type. The steam condensing system has a water-spraying device [5] for spraying water droplets into steam that rises inside the steam condensation tower and a water-collecting device [6] located below the water injection device [5], for collecting sprayed condensing droplets and condensed steam.

It follows that in a typical state-of-the art water-based granulation installation, there are important fluctuations in the incoming heat flow rate due to the incoming slag, accordingly, equivalent fluctuations in the amount of steam generated over time. In order to find a suitable compromise between installation size and costs, the steam condensation capacity of traditional condensation towers wherein cold water is sprayed onto the steam ascending into the tower in order to condense it, is often not designed to handle the full steam flow, which might be generated during peak slag flows. Overpressure relief flaps are foreseen (as seen in the top cover shown in FIG.2) to open in such cases, in order to evacuate excessive steam to the atmosphere.

However, observation has shown that, in practice, such overpressure flaps do not always reliably open at excess melt flow rates. It is theorized that steam is partially blocked from leaving through the overpressure flaps because, among others, of the "barrier" formed by the "curtain" of water constantly produced by the water injection device [2]. Possibly, at high steam rates, there is also resistance to steam flow formed by the water-collecting device [6]. Accordingly, excess steam remains inside the tower, and overpressure is subsequently generated. This can lead to partial backflow of steam at the lower inlet of the condensation tower, at the entrance of the granulation tank [3]. An internal hood is especially foreseen to separate the inside from the outside, and thus avoiding unwanted air to enter the tower and also preventing steam from being blown out of the tower.

Such reverse steam flow may lead, at the very least, to bad visibility in the casthouse, which is obviously a serious safety risk for operating personnel. Much more adversely, steam blowing back through the internal hood can lead to considerable generation of low-density slag particles (so-called "popcorn") when the steam comes into contact with the liquid hot melt inside the slag runner spout. Such hot particles, when projected into the casthouse, generate an even more severe safety risk.

WO2012/079797 A1 addresses this problem as well and proposes to selectively evacuate the excess steam via a stack to the atmosphere. This stack has an inlet communicating with the lower zone of the condensation tower and an outlet arranged to evacuate steam to the atmosphere above the condensation tower. Furthermore, the stack is equipped with an obturator device for selective evacuation of steam through the stack. However such a system requires an additional investment.

EP 0 573 769 describes a process and an installation for the wet granulation of slag comprising a condensation tower. A mixture of steam and polluted air generated during the granulation is first channeled into an ascending flow and that then the mixture is aspirated in a descending flow into an enclosure, which is maintained under partial vacuum. An aqueous alkaline solution is sprayed in a parallel flow into the said descending flow and the decontaminated uncondensed gases are discharged from the enclosure by a forced and adjustable stream that creates and maintains a partial vacuum inside the said enclosure. The gases and steam from the filtering drum are also guided into the condensation tower and treated therein together with the steam and polluted air from the granulation

### Technical problem

Accordingly, it is a first object of the present invention to provide a steam condensation installation, which enables a reliable condensation of steam generated during granulation of slag without the use of a condensation tower or water-spraying devices.. This object is achieved by an installation and a steam condensation system as claimed in claim 1.

It is another object of the invention to provide a condensation installation that enables reduction in installation and operating costs of the plant.

### General Description of the Invention

The present invention generally relates to a granulation for granulating molten material produced in a metallurgical plant, said installation comprising:
- a water injection device, for injecting granulation water into a flow of molten material and thereby granulating the molten material;
- a granulation tank for collecting the granulation water and the granulated material;
- a dewatering unit, in particular a dewatering unit with a rotary filtering drum

The installation is characterized by
- a steam collection hood situated above said dewatering unit and
- an evacuation device for evacuating steam from said hood, condensing said steam and releasing said condensed steam,
- said evacuation device having an inlet and an outlet wherein said evacuation device is connected with its inlet to said steam collection hood and its outlet is arranged to evacuate the condensed steam to the atmosphere.

According to a preferred embodiment, there is provided a granulation installation (10) for granulating molten material produced in a metallurgical plant, said installation comprising:
a water injection device (20), for injecting granulation water into a flow of molten material (14) and thereby granulating the molten material;
a granulation tank (18) for collecting the granulation water and the granulated material;
**characterized by**
a steam collecting hood, situated above said water injection device,
an evacuation device for evacuating steam from said hood, condensing said steam and evacuating said condensed steam to the atmosphere, said evacuation device (38) having an inlet (40) arranged to communicate with said hood (24) so as to evacuate the steam from said hood and an outlet arranged to evacuate said condensed steam to the atmosphere

In order to overcome the above-mentioned problem, the present invention proposes an evacuation device, for selectively evacuating and condensing steam without the use of a condensation tower and watersprayers. The evacuation device has an inlet arranged to communicate with a steam collecting hood and an outlet arranged to release entirely condensed steam. As opposed to the known systems, this system operates without any watersprayers. The steam is not condensed inside the condensation tower but in the evacuation device.

As opposed to the device of WO2012/079797 A1, this evacuation device not only evacuates the steam and vapors from the granulation plant and condenses it outside the installation without the use of water-spraying devices, but it also condenses the evacuated steam and vapors so that the impact on the environment is greatly reduced. Indeed these vapors may contain sulfur components like H₂S and the like which will be dissolved in water in the present invention.

As opposed to the device of EP 0 573 769, this installation treats the steam and polluted air generated form the granulation and the steam and polluted air generated during the dewatering in separate units. It has been found that the steam and polluted air generated during granulation and during dewatering differ very much, not only in quantity, in time but also in quality. Indeed since large quantities of compressed air are used to clean the filtering walls of the rotary drum of the dewatering unit, the steam and polluted air generated in the dewatering installation are diluted. If this mixture is conducted to the condensation tower, the condensation process may be disrupted since the steam is diluted by the air used to clean the dewatering drum and therefore the condensation of the steam in the enclosure is insufficient to maintain a constant partial vacuum in said enclosure. The steam and air mixture may thus flow back to the granulation installation with the disadvantages enumerated above i.e. bad visibility in the casthouse and generation of low-density slag particles (so-called "popcorn").

In the device of EP 0 573 769, the steam is condensed by watersprayers inside the enclosure mounted in the condensation tower, whereas in the installation object of the present application, the steam is not condensed by watersprayers and is not condensed in the condensation tower/hood but in the evacuation device. Although the evacuation devices used may be similar, they work differently. Indeed in EP 0 573 769, the evacuation device is used to create a partial vacuum in the enclosure. This partial vacuum is increased by the fact that steam is condensed, i.e. a gas is converted to a liquid. The evacuation device is thus not used or used only marginally to condense steam since the steam is condensed in the condensation tower by spraying water onto the descending stream of steam and polluted air inside the enclosure.

As opposed to the devices of WO2012/079797 A1 and EP 0 573 769, this evacuation device not only evacuates the steam and vapors from the granulation plant but it also condenses the evacuated steam and vapors so that the impact on the environment is greatly reduced. Indeed these vapors may contain sulfur components like H₂S and the like which will be dissolved in water in the present invention.

The installation is compatible with existing granulation plant designs at comparatively lower investment costs.

Small quantities of hydrogen gas are always produced while granulating slag. It has been found however that during the granulation of slag, significant quantities of hydrogen gas may be formed under some circumstances. Indeed, the hot liquid slag may contain iron and, in contact with the hot iron contained in the slag, water molecules may be split up into hydrogen and oxygen. This hydrogen gas is extremely explosive and needs to be evacuated form the granulation zone so as to avoid any accumulation of such gas in close proximity of the hot slag. Under specific circumstances, this mixture may ignite and an explosion or a fire may be the consequence. Calculations have shown that during a granulation run, the hydrogen production may vary between about 0.5 m³ H₂ /min and 8 m³ H₂/min, depending on the iron content of the slag and the diameter of the granules produced.

The installation as described in WO2012/079797 A1 may in some instances also not be suitable to eliminate this risk of fire or explosion, since the inlet of the stack is situated in the lower zone of the condensation tower and the hydrogen gas being lighter than air will inevitably accumulate in the upper zone of the condensation tower and will thus not be evacuated by the device as described in WO2012/079797 A1.

In order to permit evacuation as desired or required, the evacuation device is preferably equipped with any suitable device for controlling the flow rate of steam and/or gas through the evacuation device.

Preferably, the evacuation device comprises a vacuum pump and in particular an eductor-jet pump, that produces vacuum by means of the Venturi effect. Such an eductor-jet pump is a type of pump that uses the Venturi effect of a converging-diverging nozzle to convert the pressure energy of a motive fluid to velocity energy, which creates a low pressure zone that draws in and entrains a suction fluid. After passing through the throat of the injector, the mixed fluid expands and the velocity is reduced which results in recompressing the mixed fluids by converting velocity energy back into pressure energy. In this particular case, the motive fluid is water and the entrained suction fluid is steam and/or a mixture of steam and hydrogen gas. During the operation of the pump, the evacuated steam is condensed and mixed with the water that drives the pump. Any sulfurous compounds contained in the steam will be dissolved and neutralized in the water as well. H₂S and SO₂ will be dissolved in the water. Calculation showed that about 385 l of water are needed to dissolve H₂S contained in one 1 t steam and about 142 l are needed to dissolve the complete SO₂ contained in one 1 t steam.

The proposed evacuation device has the incontestable merit of safely evacuating any steam and hydrogen from the granulation plant and thereby considerably increasing operation safety. Moreover, the proposed evacuation device allows to condensate the evacuated steam and to dissolve and neutralize the sulfur containing compounds in water, thus reducing the environmental effect of the plant.

A further advantage of the above-described device is that the installation may be designed with a smaller condensation system, i.e. without a condensation tower. Considerable savings in capital and operating expenditure are thereby enabled. In fact, an installation equipped with the proposed evacuation device is capable of handling a total steam flow corresponding to a slag flow rate of about 6 t/min. As will be further appreciated, the evacuation device design avoids overpressure inside the granulation installation and, safely precludes steam from being blown back into the casthouse.

Preferred embodiments of the installation are defined in dependent claims. As will be understood, while not being limited thereto, the proposed installation is especially suitable for a blast furnace plant.

### Brief Description of the Drawings

Further details and advantages of the present invention will be apparent from the following detailed description of several not limiting embodiments with reference to the attached drawings, wherein:
FIG. 1 is a block schematic diagram of an embodiment of a granulation installation equipped with a steam condensation system according to the invention;
FIG. 2 illustrates a known granulation installation according to prior art.

Identical reference signs are used throughout the drawings to identify structurally or functionally similar elements.

### Description of Preferred Embodiments

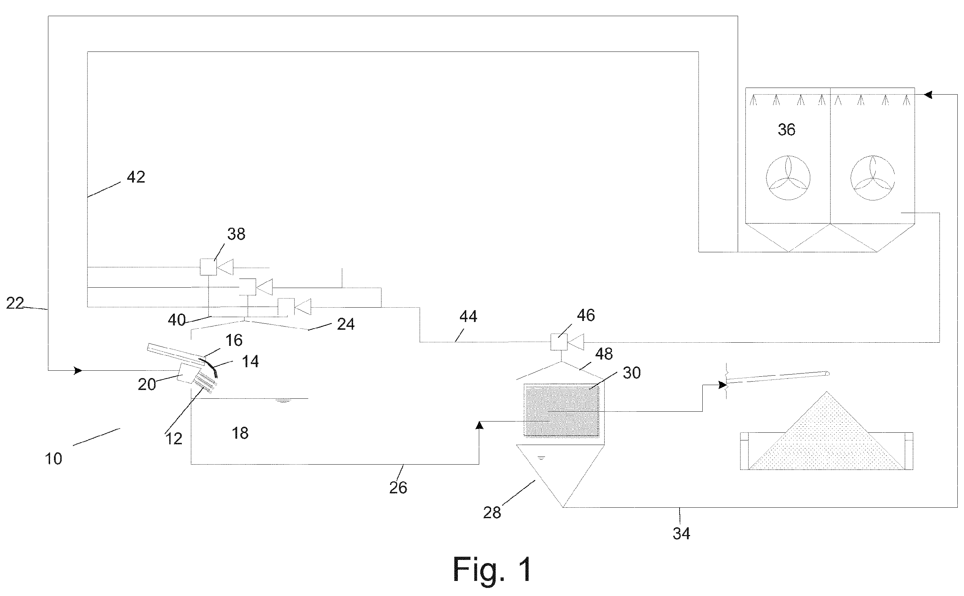

For illustrating an embodiment of the present invention, FIG.1 shows a diagrammatic view of a granulation installation 10 designed for slag granulation in a blast furnace plant (the plant not being shown). Generally speaking, the installation 10 thus serves to granulate a flow of molten blast furnace slag by quenching it with one or more jets 12 of comparatively cold granulation water. As seen in FIG. 1, a flow of molten slag 14, inevitably tapped with the pig iron from a blast furnace, falls from a hot melt runner tip 16 into a granulation tank 18. During operation, jets of granulation water 12, which are produced by a water injection device 20 (often also called a "blowing box") supplied via a supply conduit 22 by one or more parallel high-pressure pump(s) (not shown), impinge onto the molten slag 14 falling from the hot runner tip 16. A suitable configuration of a water injection device 20 is e.g. described in patent application WO 2004/048617. In older granulation installations (not shown, but encompassed), molten slag falls from a hot runner onto a cold runner, with jets of granulation water from a similar water injection device entraining the flow on the cold runner towards a granulation tank. Irrespective of the design, granulation is achieved when the granulation water jets 12 impinge on the flow of molten slag 14.

By virtue of quenching, the molten slag 14 breaks up into grain-sized "granules", which fall into a large water volume maintained in the granulation tank 18. These slag "granules" completely solidify into slag sand by heat exchange with water. It may be noted that the jets of granulation water 12 are directed towards the water surface in the granulation tank 18, thereby promoting turbulence that accelerates cooling of the slag.

As is well known, quenching of an initially hot melt (>1000°C) such as molten slag results in important quantities of steam (i.e. water vapor). This steam is usually contaminated, among others, with gaseous sulfur compounds. In order to reduce atmospheric pollution, steam released in the granulation tank 18 is collected in a steam collection hood 24 that is located vertically above the granulation tank 18. This steam collection hood 24 (hereinafter in short "hood 24") is equipped with a steam condensing system. As seen in FIG.1, the hood 24 is a small edifice compared to a traditional condensation tower as shown in Fig. 2. The hood 24 has an external shell, which is typically but not necessarily a welded steel plate construction. The hood 24 has a certain height and diameter dimensioned for a volume of emitted steam/min.

The hood 24 does not contain any water-spraying devices to condensate the steam as in a conventional condensation tower.

During operation, steam rises from the granulation tank 18 into the hood 24.

As seen in FIG.1, at the bottom of the granulation tank 18, solidified slag sand mixed with granulation water is evacuated via a drainage conduit 26. The mixture (slurry) is fed to a dewatering unit 28. The purpose of this dewatering unit 28 is to separate granulated material (i.e. slag sand) from water, i.e. to enable separate recovery of slag sand and process water. A suitable general configuration of a dewatering unit 28 is well known from existing INBA® installations or described e.g. in US patent no. 4,204,855 and thus not further detailed here. Such a dewatering unit comprises a rotary filtering drum 30, e.g. as described in more detail in US patent no. 5'248'420. Any other static or dynamic device for dewatering fine solidified melt granules may also be used. As further shown in FIG.1, a granulation water recovery tank 32 (often called a "hot water tank") is associated with the dewatering unit 28 for collecting water that is separated from the granulated slag sand. In most cases, this water recovery tank 32 is conceived as a settling tank with a settling compartment and a clean water compartment (not shown), into which the largely sand-free ("clean") water overflows. The water from the water recovery tank 32 is feed through conduit 34 to a cooling system 36 that has one or more cooling towers.

Cooled process water from the cooling system 36 is fed back via conduit 22 to the granulation installation 10 for reuse in the process. More specifically, cold water is preferably fed to the water injection device 20 via one supply conduit 22. The supply conduit 22 is equipped with the aforementioned pump(s). Whereas such a "closed-circuit" configuration for process water is preferred, open-circuit alternatives are also encompassed, with water supplied to the injection devices 20 being disposed after use.

According to an aspect to be appreciated, the hood 24 according to the invention is equipped with three evacuation devices 38 for evacuating steam and gas from the hood 24. These evacuation devices 38, as schematically illustrated in FIG.1, are vacuum pumps that are operatively associated to the hood 24. More specifically, the evacuation devices 38 illustrated in FIG.1 have an inlet 40 arranged to communicate with the hood 24 so that the vacuum created by the evacuation device 38 will evacuate any gases and/or steam contained in the hood 24.

Such an evacuation device 38 preferably comprises a vacuum pump also called eductor-jet pump, which utilizes the kinetic energy of one liquid to cause the flow of another and operate on the basic principles of flow dynamics. Eductor-jet pumps comprise a converging nozzle, a body and a diffuser and resemble syphons in appearance. In operation, the pressure energy of the motive liquid is converted to velocity energy by the converging nozzle. The high velocity liquid flow then entrains the suction fluid. Complete mixing of the motive liquid and suction fluid is performed in the body and diffuser section. The mixture of liquid/fluid is then converted back to an intermediate pressure after passing through the diffuser.

The inlet 40 of the evacuation device 38 is preferably situated near the top of the hood 24.

Although on Fig.1 there are depicted three evacuation devices 38, it is understood that a different number of such evacuation devices may be installed on the hood 24. Such evacuation devices 38 may for example be installed in ring around the top of the hood 24 i.e. in the same horizontal plane, they may be installed in a vertical plane i.e. one above the other, or in rows one above the other around the top of the hood 24.

With an arrangement as shown in FIG.1, the evacuation devices 38 can be readily supported by the structure of the external shell and/or, if desirable, partially or fully suspended to the structure of the hood 24. Accordingly, there is no need for additional bearing structure or a considerable wall-thickness of the hood 24.

In the embodiment shown on FIG. 1, the evacuation devices 38 are situated outside the hood 24, but is clear that such a evacuation device(s) 38 may also be installed inside the hood 24.

The evacuation device 38 is connected to a water supply conduit and the water in that supply conduit 42 is used to drive the evacuation devices 38 and create a vacuum to evacuate the steam and gases contained in the hood 24 and condensate the steam and mix the condensed steam and gas with the water used to drive the evacuation devices 38. For a small condensation system, about 10-20m³/h of water at a pressure of about 4 bar may be needed. For a larger system, up to about 300 m³/h at about 4 bar may be needed.

Specifically, as will become more apparent below, the evacuation device 38 enables evacuation and condensation of steam as well as the evacuation of any undesired gases like hydrogen from the hood 24. As the evacuation device 38 does not require any electricity nor contain any moving parts, the risk of creating sparks or hot surfaces is absent and the risk of fire or explosion is thus eliminated.

Furthermore, as the evacuation device 38 does not require any electricity, the installation of such a device is readily achieved at low costs.

As will be understood, appropriate dimensioning respectively the number of the evacuation device(s) 38 determines the amount of steam and gas that can be safely evacuated through the evacuation device 38 (without the risk of steam backflow). In case of an installation 10 designed for blast furnace slag, a corresponding evacuation devices 38 readily achieves a flow capable of evacuating and compensating steam generated by a slag granulation in the order of 4-6 t/min About four large ejectors of about 6 m length would be needed to evacuate the amount of steam produced by a granulation of about 4-6 t/min with a total water consumption of 1000 m³/h for the ejectors. The production of steam for the production of 1-2t/min slag however would be handled with three medium sized ejectors, consuming about 200 - 600 m³/h of water.

The flow rate of gas/steam evacuated from the hood 24 via the evacuation device 38 directly depends on the flow rate and the pressure of the water used to drive the evacuation device 38. A control device like a valve (not shown) regulating the flow and/or the pressure of the water used to drive the evacuation device 38 may thus be used to regulate the flow rate of gas/steam evacuated from the hood 24.

The water from the conduit 42 that is used to drive the evacuation devices 38 is mixed inside the evacuation device 38 with the steam evacuated from the hood 24. The steam condenses and any gases evacuated will be dissolved at least partially in the water and evacuated towards the cooling system via evacuation conduit 44. In this particular case as depicted in FIG. 1, the evacuation conduit 44 leads the water from the evacuation device 38 to the bottom part of the cooling system 36. This allows evacuating any hydrogen gas from the hood 24 to a location, which is situated at a large distance from the granulation installation, so that the fire and explosion hazard in the granulation installation is eliminated. In other embodiments, the conduit 44 could also be connected to the drainage conduit 26 and be transported to the cooling system 56 together with the water from the water-cooling device 42.

In order to warrant efficient condensation and minimum pollution at any flow rates, the evacuation devices 38 of FIG.1 is equipped with the aforementioned control device. This control device serves to "shut-off" the evacuation devices 38, i.e. to close or at least significantly restrict the flow rate of the water used to drive the evacuation devices 38 whenever the granulation installation 10 operates at or below nominal flow rates. In other words, the control device is used to evacuate steam through the evacuation device 38 selectively only when required or desired in function of the actually generated steam quantity and/or in function of the hydrogen content / concentration in the hood 24.

In a conventional system, as illustrated in FIG.2, whenever melt flow rates exceed the capacity of the hood 24, experience has shown a severe risk of backflow (reverse flow) of steam, e.g. into the hot runner and even into the casthouse (not shown) upstream of the runner tip 16. Even with overpressure flaps in the top cover and with an internal hood, as illustrated in FIG.2, achieving a certain resistance against backflow, backflow can still occur. In known manner, the internal hood (shown in FIG.2) is provided mainly for sealing the tower against entry of "false" ambient air.

Contrary to such conventional design, the proposed evacuation device 38 provides a reliable solution for safely evacuating and condensing any steam. As will be understood, the quantity of steam generated during the granulation varies widely e.g. in case of molten slag peaks because of a problem at the taphole of the blast furnace. Production of molten material in metallurgical processes is typically cyclic and subject to considerable fluctuations in terms of produced flow rates. For instance, during a tapping operation of a blast furnace, the slag flow rate is far from being constant. It shows peak values that may be more than four times the slag flow rate averaged over the duration of the tapping operation. Such peaks occur, occasionally or regularly, during short times, e.g. several minutes.

A similar evacuation device 46 may be used to serve additional evacuation purposes. In particular, the dewatering unit 28 has a steam collection hood 48 above the rotary filtering drum 30. Said evacuation device 46 may be installed so as to suck off steam and gas from the dewatering unit 28 and/or from the steam collection hood 48. The fact to use two separate hoods allows to better cope with the different volumes and qualities of steam produced on the one hand in the granulation installation and on the other hand in the dewatering unit. Furthermore, in some cases the dewatering unit may be situated quiet far away from the granulation installation so that in such a case it is not possible to treat the steam and polluted air in the condensation tower as proposed in EP 0 573 769. This configuration has the benefit of properly evacuating steam and gas from the dewatering unit 28 and condensing the steam and thus reducing visibility problems in the surroundings of the dewatering unit 28 and the installation 10 in general.

Preferably, the evacuation device(s) 38, 46 is (are) connected to a controller, which can be integrated into the process control system of the entire plant. The controller operates a remote controllable automatic valve connected to the outlet of the pump that feeds the evacuation device(s) 38, 46. Accordingly, by controlling opening and closure of the valve, the controller controls operation of the evacuation device(s) 38, 46 so as to selectively restrict or permit steam and gas passage through the evacuation device.

In conclusion, it will be appreciated that the present invention not only enables an important increase in operational safety of a water-based granulation installation 10, especially for blast furnace slag. In addition, the invention permits reliable operation at lower capital and operating expenditure.

**Legend:**

| | | | |
|---|---|---|---|
| 10 | granulation installation | 30 | rotary filtering drum |
| 12 | water jets | 32 | water recovery tank |
| 14 | melt flow | 34 | conduit |
| 16 | hot runner tip | 36 | cooling system |
| 18 | granulation tank | 38 | evacuation device |
| 20 | water injection device | 40 | inlet |
| 22 | supply conduit (of 20) | 42 | supply conduit |
| 24 | steam collecting hood | 44 | evacuation conduit |
| 26 | drainage conduit | 46 | evacuation device |
| 28 | dewatering unit | 48 | steam collection hood |

## Claims

1. A granulation installation (10) for granulating molten material produced in a metallurgical plant, said installation comprising:
a water injection device (20), for injecting granulation water into a flow of molten material (14) and thereby granulating the molten material;
a granulation tank (18) for collecting the granulation water and the granulated material;
a dewatering unit, in particular a dewatering unit (28) with a rotary filtering drum (30)
**characterized by**
- a steam collection hood (48) situated above said dewatering unit (28) and
- an evacuation device (46) for evacuating steam from said hood (48), condensing said steam and releasing said condensed steam, said evacuation device having an inlet and an outlet wherein said evacuation device is connected with its inlet to said steam collection hood (48) and its outlet is arranged to evacuate the condensed steam to the atmosphere.

2. A granulation installation (10) for granulating molten material produced in a metallurgical plant, said installation comprising:
a water injection device (20), for injecting granulation water into a flow of molten material (14) and thereby granulating the molten material;
a granulation tank (18) for collecting the granulation water and the granulated material;
**characterized by**
a steam collecting hood (24) situated above said water injection device (20),
an evacuation device (38) for evacuating steam from said hood, condensing said steam and evacuating said condensed steam to the atmosphere, said evacuation device (38) having an inlet (40) arranged to communicate with said hood (24) so as to evacuate the steam from said hood and and an outlet arranged to evacuate said condensed steam to the atmosphere).

3. The granulation installation (10) as claimed in claim 1 or 2, **characterized in that** said evacuation device (38, 46) is equipped with a device for controlling selective evacuation of steam through said evacuation device (38, 46), in particular with a regulation device for regulating a flow rate of the evacuation device (38, 46).

4. The granulation installation (10) as claimed in claim 1 or 2, **characterized in that** said evacuation device (38, 46) comprises an eductor-jet pump that produces vacuum by means of the Venturi effect.

5. The granulation installation (10) as claimed in any of the preceding claims, **characterized in that** said evacuation device (38, 46) is arranged outside said hood (24, 48).

6. The granulation installation (10) as claimed in any of the preceding claims, **characterized in that** said evacuation device (38) is supported by said hood (24, 48).

7. The granulation installation (10) as claimed in any of the preceding claims, **characterized in that** said evacuation device (38, 46) is connected to a water supply conduit (42).

8. The granulation installation (10) as claimed in any of the preceding claims, **characterized in that** said evacuation device (38, 46) comprises a control device regulating the flow and/or the pressure of the water used to drive the evacuation device (38, 46)

9. The granulation installation (10) as claimed in any of the preceding claims, **characterized in that** said condensed steam is evacuated towards a cooling system (36) or similar.

10. The granulation installation (10) as claimed in any one of the preceding claims, further comprising a sensor measuring the hydrogen content and/or the steam content, said sensor being installed in the hood (24, 48).

11. The granulation installation (10) as claimed in any one of the preceding claims, further comprising a controller device that is connected to operate an obturator device so as to selectively restrict or permit steam and gas passage through said evacuation device (38, 46).

12. Blast furnace plant comprising a granulation installation (10) as claimed in any one of the preceding claims.

## Patentansprüche

1. Granulierungseinrichtung (10) zum Granulieren von in einer Hüttenanlage hergestelltem geschmolzenem Material, wobei die Einrichtung Folgendes aufweist:
eine Wassereinspritzvorrichtung (20) zum Einspritzen von Granulierungswasser in einen Strom von geschmolzenem Material (14) und dadurch Granulieren des geschmolzenen Materials;
einen Granulierungstank (18) zum Auffangen des Granulierungswassers und des granulierten Materials;
eine Entwässerungseinheit, insbesondere eine Entwässerungseinheit (28) mit einer rotierenden Filtertrommel (30);
**gekennzeichnet durch**
eine Dampfauffanghaube (48), die sich über der Entwässerungseinheit (28) befindet, und
eine Abpumpvorrichtung (46) zum Abpumpen von Dampf von der Haube (48), Kondensieren des Dampfes und Freigeben des kondensierten Dampfes, wobei die Abpumpvorrichtung einen Einlass und einen Auslass aufweist, wobei die Abpumpvorrichtung mit ihrem Einlass an die Dampfauffanghaube (48) angeschlossen ist und ihr Auslass so angeordnet ist, dass er den kondensierten Dampf in die Atmosphäre abpumpt.

2. Granulierungseinrichtung (10) zum Granulieren von in einer Hüttenanlage hergestelltem geschmolzenem Material, wobei die Einrichtung Folgendes aufweist:
eine Wassereinspritzvorrichtung (20) zum Einspritzen von Granulierungswasser in einen Strom von geschmolzenem Material (14) und dadurch Granulieren des geschmolzenen Materials;
einen Granulierungstank (18) zum Auffangen des Granulierungswassers und des granulierten Materials;
**gekennzeichnet durch**
eine Dampfauffanghaube (24), die sich über der Wassereinspritzvorrichtung (20) befindet, eine Abpumpvorrichtung (38) zum Abpumpen von Dampf von der Haube, Kondensieren des Dampfes und Abpumpen des kondensierten Dampfes in die Atmosphäre, wobei die Abpumpvorrichtung (38) einen Einlass (40) aufweist, der so angeordnet ist, dass er mit der Haube (24) in Verbindung steht, um den Dampf von der Haube abzusaugen, und einen Auslass aufweist, der so angeordnet ist, dass er den kondensierten Dampf in die Atmosphäre abpumpt.

3. Granulierungseinrichtung (10) nach Anspruch 1 oder 2, **dadurch gekennzeichnet, dass** die Abpumpvorrichtung (38, 46) mit einer Vorrichtung zum Steuern des selektiven Abpumpens von Dampf durch die Abpumpvorrichtung (38, 46), insbesondere mit einer Regelungsvorrichtung zum Regeln einer Durchflussrate der Abpumpvorrichtung (38, 46), ausgerüstet ist.

4. Granulierungseinrichtung (10) nach Anspruch 1 oder 2, **dadurch gekennzeichnet, dass** die Abpumpvorrichtung (38, 46) eine Dampfstrahlpumpe aufweist, die durch den Venturi-Effekt ein Vakuum erzeugt.

5. Granulierungseinrichtung (10) nach einem der vorhergehenden Ansprüche, **dadurch gekennzeichnet, dass** die Abpumpvorrichtung (38, 46) außerhalb der Haube (24, 48) angeordnet ist.

6. Granulierungseinrichtung (10) nach einem der vorhergehenden Ansprüche, **dadurch gekennzeichnet, dass** die Abpumpvorrichtung (38, 46) von der Haube (24, 48) getragen wird.

7. Granulierungseinrichtung (10) nach einem der vorhergehenden Ansprüche, **dadurch gekennzeichnet, dass** die Abpumpvorrichtung (38, 46) an eine Wasserzufuhrleitung (42) angeschlossen ist.

8. Granulierungseinrichtung (10) nach einem der vorhergehenden Ansprüche, **dadurch gekennzeichnet, dass** die Abpumpvorrichtung (38, 46) eine Steuervorrichtung aufweist, die den Strom und/oder Druck des Wassers regelt, das verwendet wird, um die Abpumpvorrichtung (38, 46) zu betreiben.

9. Granulierungseinrichtung (10) nach einem der vorhergehenden Ansprüche, **dadurch gekennzeichnet, dass** der kondensierte Dampf zu einem Kühlsystem (36) oder dergleichen abgepumpt wird.

10. Granulierungseinrichtung (10) nach einem der vorhergehenden Ansprüche, ferner aufweisend einen Sensor, der den Wasserstoffgehalt und/oder den Dampfgehalt misst, wobei der Sensor in der Haube (24, 48) eingebaut ist.

11. Granulierungseinrichtung (10) nach einem der vorhergehenden Ansprüche, ferner aufweisend eine Controllervorrichtung, die so angeschlossen ist, dass sie eine Absperrvorrichtung betreibt, um selektiv den Durchtritt von Dampf und Gas durch die Abpumpvorrichtung (38, 46) zu beschränken oder zuzulassen.

12. Hochofenanlage, aufweisend eine Granulierungseinrichtung (10) nach einem der vorhergehenden Ansprüche.

## Revendications

1. Installation de granulation (10) pour granuler une matière fondue produite dans une usine métallurgique, ladite installation comprenant :
un dispositif d'injection d'eau (20), pour injecter une eau de granulation dans un flux de matière fondue (14) et ainsi granuler la matière fondue ;
une cuve de granulation (18) pour collecter l'eau de granulation et la matière granulée ;
une unité de déshydratation, en particulier une unité de déshydratation (28) avec un tambour filtrant rotatif (30)
**caractérisée par**
- une coiffe de collecte de vapeur (48) située au-dessus de ladite unité de déshydratation (28) et
- un dispositif d'évacuation (46) pour évacuer de la vapeur de ladite coiffe (48), condenser ladite vapeur et évacuer ladite vapeur condensée, ledit dispositif d'évacuation ayant une entrée et une sortie dans laquelle ledit dispositif d'évacuation est connecté avec son entrée à ladite coiffe de collecte de vapeur (48) et sa sortie est agencée de façon à évacuer la vapeur condensée dans l'atmosphère.

2. Installation de granulation (10) pour granuler une matière fondue produite dans une usine métallurgique, ladite installation comprenant :
un dispositif d'injection d'eau (20), pour injecter une eau de granulation dans un flux de matière fondue (14) et ainsi granuler la matière fondue ;
une cuve de granulation (18) pour collecter l'eau de granulation et la matière granulée ;
**caractérisée par**
une coiffe de collecte de vapeur (24) située au-dessus dudit dispositif d'injection d'eau (20),
un dispositif d'évacuation (38) pour évacuer de la vapeur de ladite coiffe, condenser ladite vapeur et évacuer ladite vapeur condensée dans l'atmosphère, ledit dispositif d'évacuation (38) ayant une entrée (40) agencée de façon à communiquer avec ladite coiffe (24) de façon à évacuer la vapeur de ladite coiffe et une sortie agencée de façon à évacuer ladite vapeur condensée dans l'atmosphère.

3. Installation de granulation (10) selon la revendication 1 ou 2, **caractérisée en ce que** ledit dispositif d'évacuation (38, 46) est équipé avec un dispositif pour commander une évacuation sélective de vapeur à travers ledit dispositif d'évacuation (38, 46), en particulier avec un dispositif de régulation pour réguler un débit du dispositif d'évacuation (38, 46).

4. Installation de granulation (10) selon la revendication 1 ou 2, **caractérisée en ce que** ledit dispositif d'évacuation (38, 46) comprend une pompe de jet d'éduction qui produit un vide au moyen de l'effet Venturi.

5. Installation de granulation (10) selon l'une quelconque des revendications précédentes, **caractérisée en ce que** ledit dispositif d'évacuation (38, 46) est agencé à l'extérieur de ladite coiffe (24, 48).

6. Installation de granulation (10) selon l'une quelconque des revendications précédentes, **caractérisée en ce que** ledit dispositif d'évacuation (38, 46) est supporté par ladite coiffe (24, 48).

7. Installation de granulation (10) selon l'une quelconque des revendications précédentes, **caractérisée en ce que** ledit dispositif d'évacuation (38, 46) est connecté à une conduite d'alimentation d'eau (42).

8. Installation de granulation (10) selon l'une quelconque des revendications précédentes, **caractérisée en ce que** ledit dispositif d'évacuation (38, 46) comprend un dispositif de commande régulant le débit et/ou la pression de l'eau utilisée pour entraîner le dispositif d'évacuation (38, 46).

9. Installation de granulation (10) selon l'une quelconque des revendications précédentes, **caractérisée en ce que** ladite vapeur condensée est évacuée vers un système de refroidissement (36) ou similaire.

10. Installation de granulation (10) selon l'une quelconque des revendications précédentes, comprenant en outre un capteur mesurant la teneur en hydrogène et/ou la teneur en vapeur, ledit capteur étant installé dans la coiffe (24, 48).

11. Installation de granulation (10) selon l'une quelconque des revendications précédentes, comprenant en outre un dispositif de contrôleur qui est connecté pour faire fonctionner un dispositif d'obturateur de façon à sélectivement restreindre ou permettre un passage de vapeur et de gaz à travers ledit dispositif d'évacuation (38, 46).

12. Usine de haut-fourneau comprenant une installation de granulation (10) selon l'une quelconque des revendications précédentes.
